# EUROPEAN PATENT APPLICATION

(11) **EP 4 825 780 A1**
(43) Date of publication of application: **21.10.2026**
(21) Application number: 25219293.5
(22) Date of filing: 28.11.2025
(51) Int. Cl.: B66B 29/02

(54) **MOUNTING DEVICE FOR PRESSURE DETECTOR, SKIRT PANEL SAFETY GUARDING SYSTEM, AND PASSENGER CONVEYOR**

(30) Priority: 15.04.2025 CN 202510472095
(71) Applicant: Otis Elevator Company, Farmington CT 06032-2568 (US)
(72) Inventor: Liu, Wentong, Hangzhou, 310019 (CN); Cheng, Lifei, Hangzhou, 310019 (CN); Wu, De, Hangzhou, 310019 (CN); Zhong, Haizhong, Hangzhou, 310019 (CN)
(74) Representative: Winter, Brandl - Partnerschaft mbB

(57) **Abstract**

The disclosure relates to a mounting device for pressure detector, a skirt panel safety guarding system, and a passenger conveyor. The mounting device for pressure detector is used for a passenger conveyor with a skirt panel, comprising: a first member; a second member movably connected to the first member and arranged adjacent to the skirt panel during use, wherein at least one of the second member and the first member is provided with an accommodating portion for accommodating one or more pressure detectors; and a preloading member configured to provide a preset force to maintain a preset mounting gap between the second member and the first member, wherein when a force formed by pressure on the skirt panel acts on the second member and exceeds the preset force, the second member generates a displacement response towards the first member such that the mounting gap decreases until the pressure detector arranged in the accommodating portion is triggered to generate a working signal. Adopting the solutions of the disclosure can effectively reduce or avoid problems such as missed detections and misjudgments relating to compressive deformations of a skirt panel.

## Description

### TECHNICAL FIELD

The present disclosure relates to the field of conveyors, and in particular, to a mounting device for pressure detector, a skirt panel safety guarding system, and a passenger conveyor.

### BACKGROUND

Passenger conveyors such as escalators and moving walkways have been widely installed and applied in many places such as shopping malls, airports, subway stations, etc., which can significantly improve people's travel efficiency and spatial mobility. During the operation of a passenger conveyor, there may be unexpected situations where passengers' feet or shoes are accidentally caught in the gaps between the steps and skirt panels of the passenger conveyor. In the prior art, detection devices are typically mounted at several positions near the skirt panels, and the aforementioned detection devices are designed to be triggered when the skirt panels are subjected to compressive deformations, so that the above unexpected situations can be detected in a timely manner.

### SUMMARY

In view of the foregoing, the present disclosure provides a mounting device for pressure detector, a skirt panel safety guarding system, and a passenger conveyor, so as to solve or at least alleviate the problems existing in the prior art and one or more problems in other aspects, or to provide alternative solutions for the prior art.

Firstly, according to one aspect of the present disclosure, a mounting device for pressure detector, for use in a passenger conveyor with a skirt panel is provided, which comprises:
a first member;
a second member movably connected to the first member and arranged adjacent to the skirt panel during use, wherein at least one of the second member and the first member is provided with an accommodating portion for accommodating one or more pressure detectors; and
a preloading member configured to provide a preset force to maintain a preset mounting gap between the second member and the first member, wherein when a force formed by pressure on the skirt panel acts on the second member and exceeds the preset force, the second member generates a displacement response towards the first member such that the mounting gap decreases until the pressure detector arranged in the accommodating portion is triggered to generate a working signal.

In a mounting device for pressure detector according to the present disclosure, optionally, the accommodating portion is at least partially located in the mounting gap, and after the first member, the second member, and the preloading member are assembled in place, a preset gap is maintained between the pressure detector arranged in the accommodating portion, and the first member or the second member.

In a mounting device for pressure detector according to the present disclosure, optionally, the mounting gap includes a first gap and a second gap, a width of the first gap being greater than a width of the second gap, and the accommodating portion is located in the first gap, a width of the preset gap being not greater than the width of the second gap.

In a mounting device for pressure detector according to the present disclosure, optionally, a range of the width of the second gap is 1-2 mm, and a range of the width of the preset gap is 0.1-1 mm.

In a mounting device for pressure detector according to the present disclosure, optionally, the first member has a first mating portion, the second member has a second mating portion, the first mating portion is configured to be detachably engaged with the second mating portion, the mounting gap is located between the first mating portion and the second mating portion, and the accommodating portion is at least partially located in the mounting gap.

In a mounting device for pressure detector according to the present disclosure, optionally, the first mating portion is configured as a through groove extending along a length direction of the first member, a top of the through groove having a channel passing through along the length direction of the first member and first convex portions located on both sides of the channel, and the second mating portion is configured as a second convex portion extending along a length direction of the second member, the second convex portion having a concave portion extending along the length direction of the second member, and after the second member is detachably engaged with the first member, the second convex portion is located in the through groove, the first convex portion is located in the concave portion, and the mounting gap is located between an outer surface of the first convex portion and an inner surface of the concave portion.

In a mounting device for pressure detector according to the present disclosure, optionally, the first member has an extension portion, the extension portion being configured to at least partially cover a top of the second member after the second member and the first member are mounted in place.

In a mounting device for pressure detector according to the present disclosure, optionally, a gap is provided between the extension portion and the top of the second member.

In a mounting device for pressure detector according to the present disclosure, optionally, the preloading member comprises one or more connectors with resilient members, the connectors are adjustably connected to the second member and the first member, and the resilient member includes a spring.

In a mounting device for pressure detector according to the present disclosure, optionally, the pressure detector includes at least one of a piezoelectric sensor, a contact switch and a pressure sensor, and the working signal includes an electrical signal.

In a mounting device for pressure detector according to the present disclosure, optionally, the piezoelectric sensor is a pressure-sensitive cable embedded in the accommodating portions of one or more mounting devices for pressure detector and arranged continuously along a length direction of the skirt panel.

Secondly, according to another aspect of the present disclosure, a skirt panel safety guarding system is provided, which comprises:
one or more mounting devices for pressure detector according to any one of the above, arranged on an inner side of a skirt panel of a passenger conveyor, wherein the first member is fixed relative to a truss of the passenger conveyor;
one or more pressure detectors, arranged in the accommodating portion; and
a controller, electrically connected to the pressure detectors and configured to control a safety operation after receiving a working signal from the pressure detectors.

In a skirt panel safety guarding system according to the present disclosure, optionally, the skirt panel safety guarding system comprises at least two mounting devices for pressure detector arranged along a length direction of the skirt panel, and the pressure detectors are arranged continuously along the length direction of the skirt panel through the at least two mounting devices for pressure detector; and/or
the safety operation comprises: controlling the passenger conveyor to stop, and/or sending safety information.

In addition, according to yet another aspect of the present disclosure, a passenger conveyor is further provided, which comprises a skirt panel safety guarding system according to any one of the above.

In a passenger conveyor according to the present disclosure, optionally, the passenger conveyor includes an escalator and a moving walkway.

The mounting devices for pressure detector according to the present disclosure are easy to manufacture, mount, and maintain, which can be quickly assembled into passenger conveyors for mounting pressure detectors, effectively reducing or avoiding problems such as missed detections and misjudgments of compressive deformations of skirt panels. In addition, full coverage protective detection of skirt panels can be achieved. This enables the system to detect unexpected situations, such as passengers' feet or shoes being clamped between the steps and skirt panels, more timely and effectively. As such, corresponding safety measures can then be taken to improve system safety. The solutions of the present disclosure can be widely applied to various types of passenger conveyors such as escalators and moving walkways.

### BRIEF DESCRIPTION OF THE DRAWINGS

The technical solutions of the present disclosure will be described in further detail below with reference to the accompanying drawings and embodiments. However, it should be understood that these drawings are designed merely for the purpose of explanation and only intended to conceptually illustrate the structures and configurations described herein, and are not required to be drawn to scale.
FIG. 1 is a three-dimensional structural schematic diagram of an example of a passenger conveyor according to the present disclosure.
FIG. 2 is a schematic side sectional view of an example of a mounting device for pressure detector according to the present disclosure already mounted in the example of FIG. 1, showing both an example of a skirt panel and an example of a pressure detector.
FIG. 3 is an enlarged schematic diagram of the structure of part A in FIG. 2.

### DETAILED DESCRIPTION

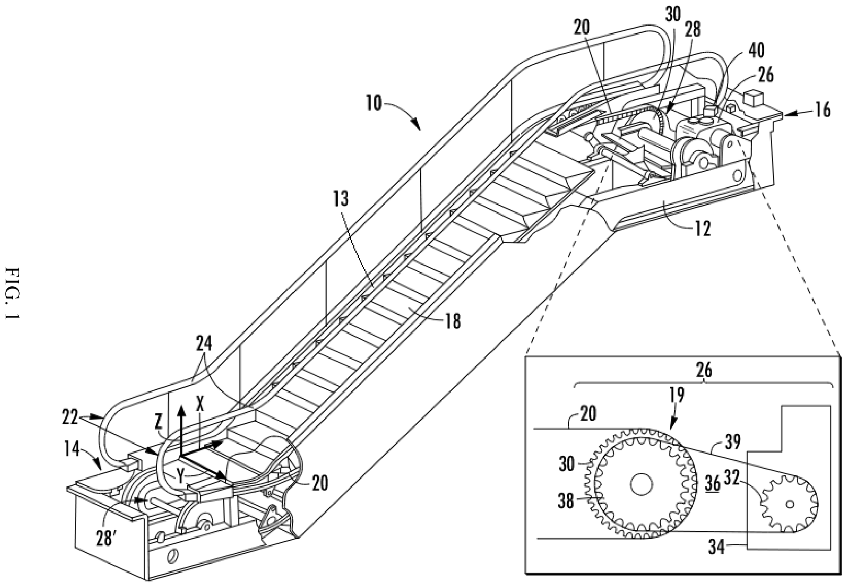

FIG. 1 exemplarily illustrates an example of an escalator 10. It should become apparent in the ensuing description that the present disclosure is applicable to other passenger conveyors, such as moving walkways. The escalator 10 includes a truss 12 extending between a lower landing 14 and an upper landing 16, wherein the truss 12 is fixedly installed on site. A plurality of sequentially connected steps 18 are connected to a step chain 20 and travel through a closed loop path within the truss 12 along a guide rail fixedly connected onto the truss, thereby being used to carry passengers. Skirt panels 13 are arranged on both sides of the steps 18 and generally maintain a gap with the steps 18. A pair of balustrades 22 include moving handrails 24. A drive machine 26, or drive system, is typically located in a machine space 28 under the upper landing 16, or alternatively or additionally located in a machine space 28' under the lower landing 14. The drive machine 26 is configured to drive the steps 18 and/or handrails 24 through the step chain 20, and operates to move the steps 18 in a chosen direction at a desired speed under normal operating conditions.

The steps 18 make a 180 degree heading change in a turn-around area 19 located under the lower landing 14 and upper landing 16. The steps 18 are pivotally attached to the step chain 20 and follow a closed loop path of the step chain 20, running from one landing to the other, and back again. The step chain 20 can be driven by, for example, an output sprocket 30. The drive machine 26 may include a drive member 32 such as an output sprocket, which may be connected to a drive motor 34 through, for example, a chain reduction assembly 36. The chain reduction assembly 36 may include a drive member 38 such as an output sprocket, which may be driven by the power transmitted from a drive chain 39 formed by, for example, an output chain, belt, and the like. The drive chain 39 may travel around the loop set by the drive members 32 and 38. The drive members 32 and 38 in some embodiments may be a driving member and a driven member, respectively, which may employ any type of rotating devices such as sprockets, rope sheaves, pulleys, gears, and the like.

The escalator 10 also includes a controller 40 that is in electronic communication with the drive motor 34. The controller 40 may be located, as shown in the example, in the machine space 28 and is configured to operate the escalator 10. For example, the controller 40 may provide drive signals to the drive motor 34 to control the acceleration, deceleration, stopping, etc. of the steps 18 via the drive chain 39 and through the step chain 20. The controller 40 may be an electronic controller including a processor and an associated memory comprising computer-executable instructions that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

Although described herein as a particular escalator and components, this is merely exemplary, and those of skill in the art will appreciate that other passenger conveyor configurations may operate with the content disclosed herein. For the sake of simplification of the drawing, identical or similar components and features may only be denoted in one or several places in the same drawing. Technical terms such as "first" and "second" are only used for distinguishing purposes and are not intended to indicate the order and relative importance thereof. The technical term "connect (or attach or engage)" includes the realization of connection in a direct or an indirect manner (or attachment or engagement).

The mounting device for pressure detector 50 according to the present disclosure may be configured in the escalator 10, such as arranging one or more mounting devices for pressure detector 50 on the inner sides of the skirt panels 13 located on both sides of the steps 18, or only on the inner side of a skirt panel 13 on one side. One or more pressure detectors 60 may be mounted in each mounting device for pressure detector 50 according to actual needs, such that the pressure detectors 60 can be used to detect compressive deformations of the skirt panels 13, and corresponding measures can then be taken to reduce or eliminate potential safety hazards.

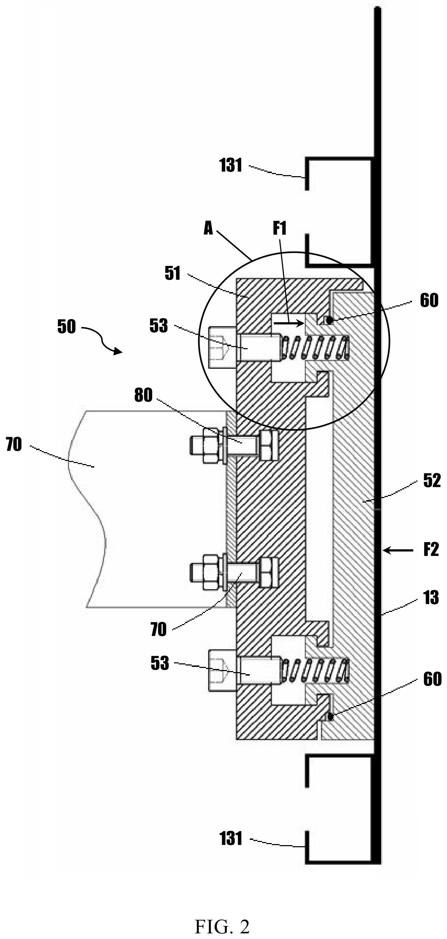

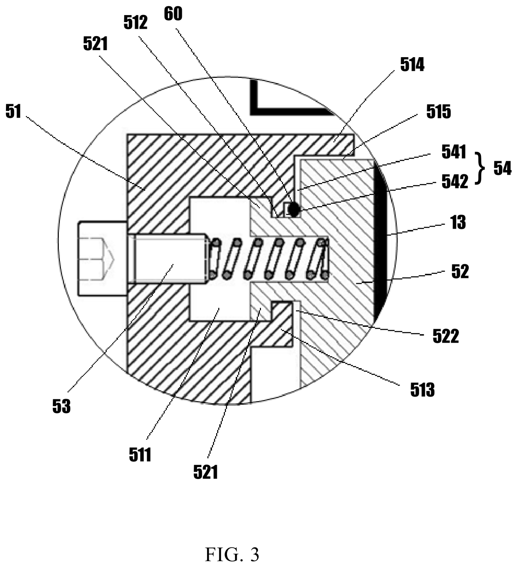

As an example, the general situation of arranging a mounting device for pressure detector 50 near the skirt panel 13 is shown in FIG. 2, and a clearer partial enlarged diagram is provided in FIG. 3. Referring to the above drawings, the mounting device for pressure detector 50 may include a first member 51, a second member 52, and a preloading member 53. The first member 51 can be fixed relative to the truss 12 of the escalator 10, such as detachably connecting the first member 51 to the truss 12 using one or several connectors 80 (e.g., bolts, screws, etc.) and optional brackets 70. The second member 52 is connected to the first member 51 and can move relative to the latter. The second member 52 can be arranged adjacent to the skirt panel 13. For example, the preloading member 53 can be used for adjustment such that the second member 52 can be attached to the surface (i.e., the inner surface) of the skirt panel 13 facing the truss 12 after installation, or maintain a certain distance with the surface. The specific arrangements can be designed and adjusted as needed, where the solutions of the present disclosure do not make any limitations in this regard.

An accommodating portion 55 can be provided on the first member 51 or the second member 52, or an accommodating portion 55 can be defined by the first member 51 and the second member 52 together, where the accommodating portion 55 is used to place one or more pressure detectors 60. For the pressure detectors 60, they may include but are not limited to piezoelectric sensors, contact switches, pressure sensors, and the like. For example, any one or more types of pressure detectors can be used separately or in combination in one mounting device for pressure detector 50, or a plurality of mounting devices for pressure detector 50 configured with different types of pressure detectors can be used in combination in the escalator 10.

As used herein, the pressure detector 60 in various embodiments can be chosen to be arranged relatively closer to the second member 52 (or the first member 51), so that when the second member 52 moves towards the first member 51, the pressure detector 60 can come into press contact with the first member 51 (or the second member 52), thereby triggering the pressure detector 60 to generate corresponding working signals. For example, the pressure detector 60 can be configured to generate electrical signals such as voltage signals, current signals, etc. when subjected to pressure changes. Wired and/or wireless communication methods can be used to transmit the above working signals to controller 40 or a separately configured controller, so that subsequent operations can be carried out based on the working signals, which will be explained later.

For example, one or more pressure-sensitive cables can be embedded in the accommodating portion 55 of a mounting device for pressure detector 50. The routing of the pressure-sensitive cables in the accommodating portion 55 can be in straight-line, wavelike or zigzag shapes. One or more such mounting devices for pressure detector 50 can be configured and arranged on the inner side of the skirt panel 13 according to application needs, so that the pressure-sensitive cables are continuously arranged along the length direction of the skirt panel 13, thereby forming a full coverage detection of the skirt panel 13. This can avoid the scenario of only arranging safety switches or sensors in a few limited areas of the skirt panel for detection as in the prior art, where such a dispersed arrangement cannot form a complete detection and timely and accurate judgment of the skirt panel as a whole, which would easily lead to accidents such as personnel injury or equipment damage caused by missed judgments, and failure to detect and handle deformations in a timely manner. The adoption of the solutions according to present disclosure can effectively solve the above problems, achieve full coverage safety protection of skirt panels, and reduce or eliminate safety hazards.

For another example, one or more contact switches such as micro switches can be arranged in the accommodating portion 55 of a mounting device for pressure detector 50, and then such mounting devices for pressure detector 50 can be arranged at appropriate positions along the length direction of the skirt panel 13 as needed, thereby forming effective coverage and detection of the entire or target area of the skirt panel 13.

The preloading member 53 is configured to provide a preset force to maintain a preset mounting gap 54 between the second member 52 and the first member 51, where the above preset force is denoted by the reference numeral F1 and a corresponding arrow in FIG. 2. The accommodating portion 55 can be optionally arranged within or near the mounting gap 54. For example, the accommodating portion 55 can be at least partially provided within the mounting gap 54, where the mounting gap is used to fully or partially accommodate the pressure detector 60.

As an optional configuration, the preloading member 53 may include one or more connectors with resilient members (such as springs, etc.). For example, as shown in FIG. 2 and other figures, the end of the connecting part is forced to abut against one end of the resilient member after installation (or suitable structures such as steps, protrusions, etc. can be located in the middle of the connecting part to sleeve the resilient member onto the connecting part and make the end abut against the above structures), and the other end of the resilient member then abuts against the second member 52 to apply the preset force F1 to it, thereby maintaining the mounting gap 54 in the normal state after assembly.

For example, as shown in the example of FIG. 2, any suitable structures such as mounting holes, screw holes, etc. can be provided on the first member 51 and the second member 52. The first member 51 and the second member 52 can be detachably and adjustably engaged through the preloading member 53, where the distance between the second member 52 and the first member 51 (i.e., the mounting gap 54), the distance between the second member 52 and the skirt panel 13, etc., can be easily adjusted as needed during use.

During the operation of escalator 10, when the skirt panel 13 at a certain position is deformed due to pressure (for example, two installation structures 131 provided for the installation of skirt panel 13 are exemplarily illustrated in FIG. 2, where usually the skirt panel area located between them is more prone to compressive deformation due to the relative lack of support), the force F2 formed at this point will act on the second member 52 of the mounting device for pressure detector 50 that has been mounted in place. When the force F2 exceeds the aforementioned preset force F1, the force F2 will force the second member 52 to move towards the direction of the first member 51 that has been fixed in place. This will cause the previously maintained mounting gap 54 to continuously decrease until the pressure detector 60 arranged within the accommodating portion 55 is triggered to generate a working signal.

As used herein, the first member 51 and the second member 52 in various embodiments may be configured to have a first mating portion and a second mating portion fitted to each other, respectively. After the first member 51 and the second member 52 are detachably mounted in place, the first mating portion and the second mating portion can be engaged and form an mounting gap 54 between them. The accommodating portion 55 can be fully or partially located in the mounting gap 54 according to application needs. As an example, the aforementioned first mating portion can be constructed with a through groove 511, which extends along the length direction of the first member 51, and a channel 512 can be formed at the top of the through groove 511 to pass through the length direction of the first member 51, and first convex portions 513 can be provided on both sides of the channel 512, that is, the first mating portion can be constructed to a roughly C-shaped groove structure. In addition, the second mating portion can be constructed with a second convex portion 521, which extends along the length direction of the second member 52. A concave portion 522 is provided on the second convex portion 521, which also extends along the length direction of the second member 52. When assembling the first member 51 and the second member 52, the installation can be carried out along the opening direction of the through groove 511, so that the second convex portion 521 is located inside the through groove 511 and the first convex portion 513 is located inside the concave portion 522, thereby forming an engagement using these concave-convex fitting structures. And then, the preloading member 53 can be mounted and the preset force F1 provided by it can be used to form an mounting gap 54 between the outer surface of the first convex portion 513 of the first member 51 and the inner surface of the concave portion 522 of the second member 52. The above configuration and arrangement have been exemplarily illustrated in FIGS. 2 and 3.

According to different application scenarios, the mounting gap 54 can be configured as a gap with a single width dimension, or a gap with a plurality of different width dimensions. As an example, referring to FIGS. 2 and 3, the mounting gap 54 can be configured to include a first gap 541 (also known as the main gap) and a second gap 542 (also known as the secondary gap), which can be connected in association or independent of each other without being connected. The width of the former is greater than the width of the latter, and the accommodating portion 55 can be located in the first gap 541. As an optional configuration, upon assembly of the first member 51, the second member 52, and the preloading member 53, a preset gap 543 can be maintained between the pressure detector 60 located in the accommodating portion 55 and the first member 51 (or the second member 52), where the width of this gap can be optionally set to be less than or equal to the second gap 542. For example, the width of the second gap 542 can be set to 1-2 mm, such as 1 mm, 1.2 mm, 1.5 mm, 1.8 mm, 2 mm, etc., and the width of the preset gap 543 can be set to 0.1-1 mm, such as 0.1 mm, 0.2 mm, 0.5 mm, 0.8 mm, 1 mm, and the like.

By adopting the combination arrangements of the multi-stage gaps mentioned above, on the one hand, the space can be fully utilized to flexibly arrange the accommodating portions to accommodate corresponding pressure detectors, and on the other hand, it helps to avoid problems such as missed detections and misjudgments of compressive deformations of the skirt panel. Because a gap with a relatively small width (e.g., the second gap 542) can provide a certain buffer redundancy, it can appropriately extend the triggering response time of the pressure detectors, thereby avoiding the problem of misjudgment caused by false activation of the pressure detectors due to a slight touch on the skirt panel. Only when the skirt panel does undergo compressive deformations, will the gap with a relatively large width (e.g., the first gap 541) also gradually decrease during the continuous deformation process of the skirt panel until the pressure detectors are triggered. In addition, according to the requirements of actual scenarios, a suitable gap with a relatively small width can be chosen to be configured during installation, so as to adjust the measurement sensitivity of the pressure detectors for the compressive deformations of the skirt panel, thereby avoiding missed detections and other problems. The aforementioned multi-stage gap mechanism not only ensure accurate detection and judgment of compressive deformations of the skirt panel, significantly reducing the probability of misjudgments and missed detections, but also facilitates the synergistic optimization of system safety protection and operational efficiency.

The general situation of the mounting device for pressure detector 50 and the components thereof have been discussed above. It should be appreciated that the present disclosure allows for flexible design of the first member 51, the second member 52, and the preloading member 53 as needed in terms of manufacturing process, structural construction, material usage, configuration quantity, and other aspects.

For example, the first member 51 and the second member 52 can each be made of one or more materials. They can be made of the same or different materials, such as both being optionally made of plastic material in the form of long strips. For another example, the first member 51 can be constructed with an extension portion 514, so that after the second member 52 is assembled with the first member 51, the extension portion 514 can be used to fully or partially cover the top of the second member 52, thereby helping to prevent dust, particles, and other debris from entering the interior of the mounting device for pressure detector 50, for example, accidental entry of the above substances into the mounting gap 54 may affect the relative movement between the second member 52 and the first member 51, the triggering operation of the pressure detector 60, and the like. For yet another example, a gap 515 may be optionally provided between the extension portion 514 and the top of the second member 52, which facilitates installation and adjustment operations as well as the movement of the second member 52 relative to the first member 51. The specific dimensions of the gap 515 can be selected and designed according to application needs. For still another example, one or more mounting devices for pressure detector may be optionally arranged in structurally relatively weak areas of the skirt panel, such as the area between the two installation structures 131 of the skirt panel 13 mentioned earlier, which is conducive to detecting such specific target areas and fully exploiting the technical advantages of the solutions of the present disclosure.

The present disclosure also provides a skirt panel safety guarding system, which can be applied to various passenger conveyors such as escalators and moving walkways. The skirt panel safety guarding system may include the mounting device for pressure detector of the present disclosure, pressure detectors arranged in the accommodating portions of the mounting device for pressure detector, and controllers electrically connected to the pressure detectors, which have been described in detail previously herein.

For the above controllers, existing controllers already configured in the passenger conveyor can be used, or one or several controllers can be separately configured. When the controller receives a working signal from the pressure detector, the controller can issue instructions to control various possible safety operations, including but not limited to controlling to stop the passenger conveyor, sending safety information (e.g., using any feasible method such as voice, text, and/or photoelectricity to issue on-site alarms, sending messages to notify relevant personnel to go to the scene, and issuing warning messages on the local or remote management platform of the passenger conveyor), etc., in order to timely handle possible abnormal situations and restore normal operation of the passenger conveyor as soon as possible.

A mounting device for pressure detector, a skirt panel safety guarding system, and a passenger conveyor according to the present disclosure have been described above in detail by way of examples only. These examples are merely used to illustrate the principles and embodiments of the present disclosure, rather than limiting the present disclosure. Various modifications and improvements can be made by those skilled in the art without departing from the scope of the present disclosure. Therefore, all equivalent technical solutions should fall within the scope of the present disclosure and be defined by the claims of the present disclosure.

## Claims

1. A mounting device for pressure detector, for use in a passenger conveyor having a skirt panel, comprising:
a first member;
a second member movably connected to the first member and arranged adjacent to the skirt panel during use, wherein at least one of the second member and the first member is provided with an accommodating portion for accommodating one or more pressure detectors; and
a preloading member configured to provide a preset force to maintain a preset mounting gap between the second member and the first member, wherein when a force formed by pressure on the skirt panel acts on the second member and exceeds the preset force, the second member generates a displacement response towards the first member such that the mounting gap decreases until the pressure detector arranged in the accommodating portion is triggered to generate a working signal.

2. The mounting device for pressure detector according to claim 1, wherein the accommodating portion is at least partially located in the mounting gap, and after the first member, the second member, and the preloading member are assembled in place, a preset gap is maintained between the pressure detector arranged in the accommodating portion, and the first member or the second member.

3. The mounting device for pressure detector according to claim 2, wherein the mounting gap includes a first gap and a second gap, a width of the first gap being greater than a width of the second gap, and the accommodating portion is located in the first gap, a width of the preset gap being not greater than the width of the second gap.

4. The mounting device for pressure detector according to claim 3, wherein a range of the width of the second gap is 1-2 mm, and a range of the width of the preset gap is 0.1-1 mm.

5. The mounting device for pressure detector according to claim 1, wherein the first member has a first mating portion, the second member has a second mating portion, the first mating portion is configured to be detachably engaged with the second mating portion, the mounting gap is located between the first mating portion and the second mating portion, and the accommodating portion is at least partially located in the mounting gap.

6. The mounting device for pressure detector according to claim 5, wherein the first mating portion is configured as a through groove extending along a length direction of the first member, a top of the through groove having a channel passing through along the length direction of the first member and first convex portions located on both sides of the channel, and the second mating portion is configured as a second convex portion extending along a length direction of the second member, the second convex portion having a concave portion extending along the length direction of the second member, and after the second member is detachably engaged with the first member, the second convex portion is located in the through groove, the first convex portion is located in the concave portion, and the mounting gap is located between an outer surface of the first convex portion and an inner surface of the concave portion.

7. The mounting device for pressure detector according to claim 1, wherein the first member has an extension portion, the extension portion being configured to at least partially cover a top of the second member after the second member and the first member are mounted in place.

8. The mounting device for pressure detector according to claim 7, wherein a gap is provided between the extension portion and the top of the second member.

9. The mounting device for pressure detector according to claim 1, wherein the preloading member comprises one or more connectors with resilient members, the connectors are adjustably connected to the second member and the first member, and the resilient member includes a spring.

10. The mounting device for pressure detector according to claim 1, wherein the pressure detector includes at least one of a piezoelectric sensor, a contact switch and a pressure sensor, and the working signal includes an electrical signal.

11. The mounting device for pressure detector according to claim 10, wherein the piezoelectric sensor is a pressure-sensitive cable embedded in the accommodating portions of one or more mounting devices for pressure detector and arranged continuously along a length direction of the skirt panel.

12. A skirt panel safety guarding system, comprising:
one or more mounting devices for pressure detector according to any one of claims 1-11, arranged on an inner side of a skirt panel of a passenger conveyor, wherein the first member is fixed relative to a truss of the passenger conveyor;
one or more pressure detectors, arranged in the accommodating portion; and
a controller, electrically connected to the pressure detectors and configured to control a safety operation after receiving a working signal from the pressure detectors.

13. The skirt panel safety guarding system according to claim 12, wherein the skirt panel safety guarding system comprises at least two mounting devices for pressure detector arranged along a length direction of the skirt panel, and the pressure detectors are arranged continuously along the length direction of the skirt panel through the at least two mounting devices for pressure detector; and/or
the safety operation comprises: controlling the passenger conveyor to stop, and/or sending safety information.

14. A passenger conveyor, comprising the skirt panel safety guarding system according to claim 12 or 13.

15. The passenger conveyor according to claim 14, wherein the passenger conveyor includes an escalator and a moving walkway.
